(19) **Europäisches Patentamt / European Patent Office / Office européen des brevets**

(11) **EP 2 511 306 B1**

(12) **EUROPEAN PATENT SPECIFICATION**

(45) Date of publication and mention of the grant of the patent:
**28.05.2014 Bulletin 2014/22**

(51) Int Cl.:
**C08F 10/06** (2006.01)    **C08F 4/654** (2006.01)
**C08F 4/655** (2006.01)    **C08F 4/651** (2006.01)
**C08F 4/02** (2006.01)

(21) Application number: **12173608.6**

(22) Date of filing: **26.11.2008**

(54) **Catalyst with low surface area**

Katalysator mit niedriger Oberfläche

Catalyseur avec zone de surface faible

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.11.2007 EP 07122048**

(43) Date of publication of application:
**17.10.2012 Bulletin 2012/42**

(62) Document number(s) of the earlier application(s) in accordance with Art. 76 EPC:
**08854881.3 / 2 227 492**

(73) Proprietor: **Borealis Technology Oy**
**06101 Porvoo (FI)**

(72) Inventors:
• **Leinonen, Timo**
**06750 Tolkkinen (FI)**
• **Denifl, Peter**
**00990 Helsinki (FI)**
• **Haikarainen, Anssi**
**04300 Tuusula (FI)**
• **Vestberg, Torvald**
**06100 Porvoo (FI)**

(74) Representative: **Lux, Berthold**
**Maiwald Patentanwalts GmbH**
**Elisenhof**
**Elisenstraße 3**
**80335 München (DE)**

(56) References cited:
**EP-A1- 1 803 743    WO-A1-03/000754**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a new catalyst as well to its use in polymerization processes.

In the field of catalysts since many years great efforts are undertaken to further improve the catalyst types tailored for specific purposes. For instance in polymerization processes Ziegler-Natta catalysts are widely used having many advantages. Usually such Ziegler-Natta catalysts are typically supported on carrier materials, such as porous organic and inorganic support materials, such as silica, $MgCl_2$ or porous polymeric materials. However such types of catalysts supported on external porous support or carrier material have quite often the drawback that in polymerization processes of propylene copolymers with high comonomer content it comes to undesired stickiness problems in the reactor vessels as well as in the transfer lines. Moreover, the morphology of such catalyst systems is highly dependent on the morphology of the carrier material and thus lead further to polymers with rather low bulk density which is detrimental in view of high output rates.

In WO 2005/113613 it is suggested to use a catalyst as described in WO 03/000754 in the manufacture of heterophasic propylene copolymers. The employed catalyst enables to increase the output rate since the bulk density of the polymerized product can be increased. The catalyst is in particular featured by a rather low surface area. However such types of catalysts are unsuitable in processes in which high amounts of comomers shall be incorporated into the polymer. In particular the above mentioned stickiness cannot be satisfactorily reduced.

WO 2007/077027 provides also catalyst particles with rather low surface area however additionally featured by inclusions, i.e. areas within the particles without any catalytic activity. Such types of catalyst are an advancement compared to the catalysts known in the art and as described in WO 03/000754. For instance such types of catalysts enable to produce propylene polymers with a certain amount of comonomers. However neither this important fact has been recognized nor has been recognized that a further improvement of such type of catalysts might bring the breakthrough in the manufacture of propylene copolymers with high comonomer content.

Accordingly the object of the present invention is to provide a catalyst which enables to produce propylene copolymers, in particular hetereophasic propylene copolymers or random propylene copolymers, with high comonomer content, i.e. even higher than 35 wt.-%, overcoming the known stickiness problems in the reactor vessels as well as in the transfer lines. Thus it is a further object of the present invention to reduce the risk of reactor fouling. Moreover a high throughput should be assured.

The finding of the present invention is to provide a catalyst as a solid particle with low surface area wherein said particle comprises solid material of surface area below 500 $m^2$/g and small particle size.

Accordingly the present invention is directed to a catalyst in form of a solid particle, wherein the particle

(a) has a specific surface of less than 20 $m^2$/g,
(b) comprises a transition metal compound, where the metal is selected from one of the groups 4 to 10 of the periodic table (IUPAC) or a compound of actinide or lanthanide,
(c) comprises a metal compound, where the metal is selected from one of the groups 1 to 3 of the periodic table (IUPAC), and
(d) comprises solid material, wherein the solid material

(i) does not comprise catalytically active sites,
(ii) has a specific surface area below 500 $m^2$/g, and
(iii) has a mean particle size below 200 nm.

It can be also said, that the solid particle comprises solid material being free from transition metal compounds which are selected from one of the groups 4 to 10 of the periodic table (IUPAC) and free from compounds of actinide or lanthanide.

In alternative embodiment the catalyst is defined by being a solid particle, wherein the solid particle

(a) has a surface area measured of less than 20 $m^2$/g,
(b) comprises

(i) a transition metal compound where the metal is selected from one of the groups 4 to 10 of the periodic table (IUPAC) or a compound of actinide or lanthanide,
and
(ii) a metal compound, where the metal is selected from one of the groups 1 to 3 of the periodic table (IUPAC),

wherein (at least) the transition metal compound (or the compound of actinide or lanthanide) (i) with the metal compound (ii) constitutes the active sites of said particle,

and

(c) comprises a solid material, wherein the solid material

(i) does not comprise catalytically active sites,
(ii) has a specific surface area below 500 $m^2/g$, and
(iii) has a mean particle size below 200 nm.

It can be also said, that the solid particle comprises a solid material being free from transition metal compounds, where the metal is selected from one of the groups 4 to 10 of the periodic table (IUPAC) and free from compounds of actinide or lanthanide.

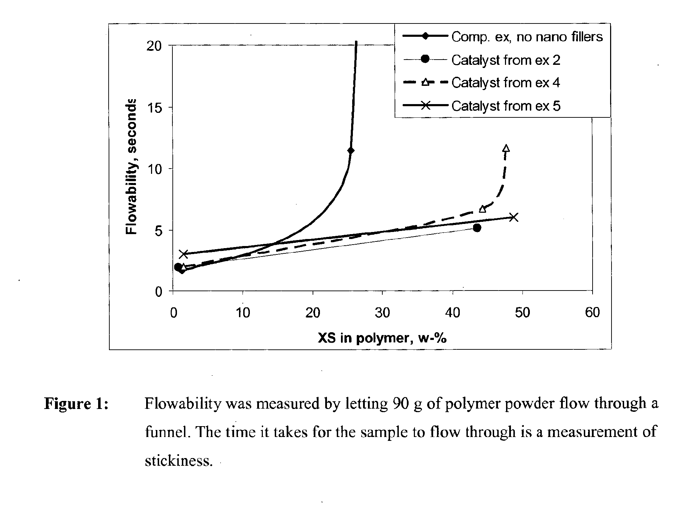

Surprisingly it has been found out that with the above defined catalyst propylene copolymers with high comonomer content are obtainable without causing any stickiness problems during the manufacture. Also the throughput of the produced material is higher due to the increased bulk density of the produced polymers. As can be learned for instance from figure 1 with the new catalyst heterophasic propylene copolymers are producible with xylene solubles far above 40 wt.-% and nevertheless showing excellent flowability properties. The catalyst particle is in particular featured by very low surface area which indicates that the surface of the catalyst particle is essentially free of pores penetrating the interior of the particles. On the other hand, the catalyst particle comprises solid material which however causes areas within the particle without any catalytic activity. Because of the "replication effect", with the new catalyst inter alia a heterophasic propylene copolymer is producible, wherein said copolymer is featured by a polymer matrix having an internal pore structure, which however does not extend to the matrix surface. In other words the matrix of such a heterophasic propylene copolymer has internal pores or cavities which have no connection to the surface of the matrix. These internal pores or cavities are able to accumulate the elastomeric propylene copolymer produced in a polymerization stage, where heterophasic polymer is produced. In a multistage polymerization process this is usually the second stage. Thus the elastomeric material mainly concentrates in the interior of the matrix. The elastomeric material however is the main causer of the stickiness problems in such type of processes, where normal supported catalysts are used, which problem can now be avoided. In a special and preferred embodiment the solid material is evenly distributed within in the solid particle and due to the replication effect it is also possible to distribute within the propylene polymer matrix the elastomeric propylene copolymer very evenly. This allows avoiding the formation of a concentration gradient within the polymer particle. Thus the new catalyst is the ideal candidate for processes for producing heterophasic propylene copolymers. But not only for the manufacture of heterophasic systems the outstanding character of the new catalyst comes obvious also when this new catalyst is employed in processes for the manufacture of random propylene copolymers with high comonomer content. The new catalyst enables to produce random propylene copolymers with reasonable high amounts of comonomer and having good randomness. Moreover also during the process no stickiness problems occur, even with high comonomer content.

Naturally the catalyst of the present invention can be used for producing random and heterophasic polypropylene with lower amounts of comonomer, or for producing homopolymers, too.

In the following the invention as defined in the two embodiments as stated above is further specified.

As stated above one requirement is that the catalyst is in the form of a solid particle. The particle is typically of spherical shape, although the present invention is not limited to a spherical shape. The solid particle in accordance with the present invention also may be present in round but not spherical shapes, such as elongated particles, or they may be of irregular size. Preferred in accordance with the present invention, however, is a particle having a spherical shape.

A further essential aspect of the present invention is that the catalyst particle is essentially free of pores or cavities having access to the surface. In other words the catalyst particle has areas within the particle being not catalytic active but the catalyst particle is essentially free of pores or cavities, being open to the surface. The low surface area of the catalyst particle shows the absence of open pores.

Conventional Ziegler-Natta catalysts are supported on external support material. Such material has a high porosity and high surface area meaning that its pores or cavities are open to its surface. Such kind of supported catalyst may have a high activity, however a drawback of such type of catalysts is that it tends to produce sticky material in particular when high amounts of comonomer is used in the polymerization process.

Therefore it is appreciated that the catalyst as defined herein is free from external support material and has a rather low to very low surface area. A low surface area is insofar appreciated as therewith the bulk density of the produced polymer can be increased enabling a high throughput of material. Moreover a low surface area also reduces the risk that the solid catalyst particle has pores extending from the interior of the particle to the surface. Typically the catalyst particle has a surface area measured according to the commonly known BET method with $N_2$ gas as analysis adsorptive of less than 20 $m^2/g$, more preferably of less than 15 $m^2/g$, yet more preferably of less than 10 $m^2/g$. In some embodiments, the solid catalyst particle in accordance with the present invention shows a surface area of 5 $m^2/g$ or less.

The catalyst particle can be additionally defined by the pore volume. Thus it is appreciated that the catalyst particle has a porosity of less than 1.0 ml/g, more preferably of less than 0.5 5 ml/g, still more preferably of less than 0.3 ml/g and even less than 0.2 ml/g. In another preferred embodiment the porosity is not detectable when determined with the method applied as defined in the example section.

The solid catalyst particle in accordance with the present invention furthermore shows preferably a predetermined particle size. Typically, the solid particles in accordance with the present invention show uniform morphology and often a narrow particle size distribution.

Moreover the solid catalyst particle in accordance with the present invention typically has a mean particle size of not more than 500 $\mu$m, i.e. preferably in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 80 $\mu$m, more preferred 10 to 60 $\mu$m. In some cases the mean particle size is in the range of 20 to 50 $\mu$m.

The inventive catalyst particle comprises of course one or more catalytic active components. These catalytic active components constitute the catalytically active sites of the catalyst particle. As explained in detail below the catalytic active components, i.e. the catalytically active sites, are distributed within the part of the catalyst particles not being the solid material. Preferably they are distributed evenly.

Active components according to this invention are, in addition to the transition metal compound which is selected from one of the groups 4 to 10 of the periodic table (IUPAC) or a compound of actinide or lanthanide and the metal compound which is selected from one of the groups 1 to 3 of the periodic table (IUPAC) (see above and below), also aluminum compounds, additional transition metal compounds, and/or any reaction product(s) of a transition compound(s) with group 1 to 3 metal compounds and aluminum compounds. Thus the catalyst may be formed in situ from the catalyst components, for example in solution in a manner known in the art.

The catalyst in solution (liquid) form can be converted to solid particles by forming an emulsion of said liquid catalyst phase in a continuous phase, where the catalyst phase forms the dispersed phase in the form of droplets. By solidifying the droplets, solid catalyst particles are formed.

It should also be understood that the catalyst particle prepared according to the invention may be used in a polymerization process together with cocatalysts to form an active catalyst system, which further may comprise e.g. external donors etc.. Furthermore, said catalyst of the invention may be part of a further catalyst system. These alternatives are within the knowledge of a skilled person.

Thus preferably the catalyst particle has a surface area of less than 20 m$^2$/g and comprises,

(a) a transition metal compound which is selected from one of the groups 4 to 10, preferably titanium, of the periodic table (IUPAC) or a compound of an actinide or lanthanide,
(b) a metal compound which is selected from one of the groups 1 to 3 of the periodic table (IUPAC), preferably magnesium,
(c) optionally an electron donor compound,
(d) optionally an aluminum compound, and
(e) solid material, wherein the solid material

(i) does not comprise catalytically active sites,
(ii) has a specific surface area below 430 m$^2$/g, and
(iii) has a mean particle size below 100 nm.

Suitable catalyst compounds and compositions and reaction conditions for forming such a catalyst particle is in particular disclosed in WO 03/000754, WO 03/000757, WO 2004/029112 and WO 2007/077027, all four documents are incorporated herein by reference.

Suitable transition metal compounds are in particular transition metal compounds of transition metals of groups 4 to 6, in particular of group 4, of the periodic table (IUPAC). Suitable examples include Ti, Fe, Co, Ni, Pt, and/or Pd, but also Cr, Zr, Ta, and Th, in particular preferred is Ti, like TiCl$_4$. Of the metal compounds of groups 1 to 3 of the periodic table (IUPAC) preferred are compounds of group 2 elements, in particular Mg compounds, such as Mg halides, Mg alkoxides etc. as known to the skilled person.

In particular a Ziegler-Natta catalyst (preferably the transition metal is titanium and the metal is magnesium) is employed, for instance as described in WO 03/000754, WO 03/000757, WO 2004/029112 and WO 2007/077027.

As the electron donor compound any donors known in the art can be used, however, the donor is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a C2-C16 alkanol and/or diol, and is preferable dioctyl phthalate.

The aluminum compound is preferably a compound having the formula (I)

$$AlR_{3-n}X_n \qquad (I)$$

wherein

R      stands for a straight chain or branched alkyl or alkoxy group having 1 to 20, preferably 1 to 10 and more preferably 1 to 6 carbon atoms,

X      stands for halogen, preferably chlorine, bromine or iodine, especially chlorine and

n      stands for 0, 1, 2 or 3, preferably 0 or 1.

Preferably alkyl groups having from 1 to 6 carbon atoms and being straight chain alkyl groups, such as methyl, ethyl, propyl, butyl, pentyl or hexyl, preferably methyl, ethyl, propyl and/or butyl.

Illustrative examples of aluminum compounds to be employed in accordance with the present invention are diethyl aluminum ethoxide, ethyl aluminum diethoxide, diethyl aluminum methoxide, diethyl aluminum propoxide, diethyl aluminum butoxide, dichloro aluminum ethoxide, chloro aluminum diethoxide, dimethyl aluminum ethoxide.

Other suitable examples for the above defined aluminum compounds are tri-(C1-C6)-alkyl aluminum compounds, like triethyl aluminum, tri iso-butyl aluminum, or an alkyl aluminum compound bearing one to three halogen atoms, like chlorine. In particular preferred is triethylaluminum, diethylaluminum chloride and diethyl aluminum ethoxide.

As mentioned above catalyst systems may include in addition to the solid catalyst particles cocatalysts and/ external donor(s) in a manner known in the art.

As the conventional cocatalyst, e.g. those based on compounds of group 13 of the periodic 10 table (IUPAC), e.g. organo aluminum, such as aluminum compounds, like aluminum alkyl, aluminum halide or aluminum alkyl halide compounds (e.g. triethylaluminum) compounds, can be mentioned. Additionally one or more external donors can be used which may be typically selected e.g. from silanes or any other well known external donors in the field. External donors are known in the art and are used as stereoregulating agent in propylenepolymerization. The external donors are preferably selected from hydrocarbyloxy silane compounds and hydrocarbyloxy alkane compounds.

Typical hydrocarbyloxy silane compounds have the formula (II)

$$R'_O Si(OR'')_{4-O} \qquad (II)$$

wherein

R'     is an a- or b-branched C3-C12-hydrocarbyl,

R''    a C1-C12-hydrocarbyl, and

O      is an integer 1-3.

More specific examples of the hydrocarbyloxy silane compounds which are useful as external electron donors in the invention are diphenyldimethoxy silane, dicyclopentyldimethoxy silane, dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane, cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane. Most preferably, the alkoxy silane compound having the formula (3) is dicyclopentyl dimethoxy silane or cyclohexylmethyl dimethoxy silane.

It is also possible to include other catalyst component(s) than said catalyst components to the catalyst of the invention.

The solid catalyst particle as defined in the instant invention is furthermore preferably characterized in that it comprises the catalytically active sites distributed throughout the solid catalyst particle, however not in those parts comprising solid material as defined above and in further detail below. In accordance with the present invention, this definition means that the catalytically active sites are evenly distributed throughout the catalyst particle, preferably that the catalytically active sites make up a substantial portion of the solid catalyst particle in accordance with the present invention. In accordance with embodiments of the present invention, this definition means that the catalytically active components, i.e. the catalyst components, make up the major part of the catalyst particle.

A further requirement of the present invention is that the solid catalyst particle comprises solid material not comprising catalytically active sites. Alternatively or additionally the solid material can be defined as material being free of transition metals of groups 4 to 6, in particular of group 4, like Ti, of the periodic table (IUPAC) and being free of a compound of actinide or lanthanide. In other words the solid material does not comprise the catalytic active materials as defined under (b) of claim 1, i.e. do not comprise such compounds or elements, which are used to establish catalytically active sites. Thus in case the solid catalyst particle comprise any compounds of one of transition metals of groups 4 to 6, in particular of group 4, like Ti, of the periodic table (IUPAC) or a compound of actinide or lanthanide these are then not present in the solid material.

Such a solid material is preferably (evenly) dispersed within the catalyst particle. Accordingly the solid catalyst particle can be seen also as a matrix in which the solid material is dispersed, i.e. form a dispersed phase within the matrix phase of the catalyst particle. The matrix is then constituted by the catalytically active components as defined above, in particular by the transition metal compounds of groups 4 to 10 of the periodic table (IUPAC) (or a compound of actinide or lanthanide) and the metal compounds of groups 1 to 3 of the periodic table (IUPAC). Of course all the other catalytic compounds as defined in the instant invention can additionally constitute to the matrix of the catalyst particle in which the solid material is dispersed.

The solid material usually constitutes only a minor part of the total mass of the solid catalyst particle. Accordingly the solid particle comprises up to 30 wt.-% solid material, more preferably up to 20 wt.-%. It is in particular preferred that the solid catalyst particle comprises the solid material in the range of 1 to 30 wt.-%, more preferably in the range of 1 to 20 wt.-% and yet more preferably in the range of 1 to 10 wt.-%.

The solid material may be of any desired shape, including spherical as well as elongated shapes and irregular shapes. The solid material in accordance with the present invention may have a plate-like shape or they may be long and narrow, for example in the shape of a fiber. However any shape which causes an increase of surface area is less favorable or undesirable. Thus a preferred solid material is either spherical or near spherical. Preferably the solid material has a spherical or at least near spherical shape.

Preferred solid material are inorganic materials as well as organic, in particular organic polymeric materials, suitable examples being nano-materials, such as silica, montmorillonite, carbon black, graphite, zeolites, alumina, as well as other inorganic particles, including glass nano-beads or any combination thereof. Suitable organic particles, in particular polymeric organic particles, are nano-beads made from polymers such as polystyrene, or other polymeric materials. In any case, the solid material employed of the solid catalyst particle has to be inert towards the catalytically active sites, during the preparation of the solid catalyst particle as well as during the subsequent use in polymerization reactions. This means that the solid material is not to be interfered in the formation of active centres. One further preferred essential requirement of the solid material is that it does not comprise any compounds which are to be used as catalytically active compounds as defined in the instant invention.

Thus, for instance the solid material used in the present invention cannot be a magnesium-aluminum-hydroxy-carbonate. This material belongs to a group of minerals called layered double hydroxide minerals (LDHs), which according to a general definition are a broad class of inorganic lamellar compounds of basic character with high capacity for anion intercalation (Quim. Nova, Vol. 27, No.4, 601-614, 2004). This kind of materials are not suitable to be used in the invention due to the reactivity of the OH- groups included in the material, i.e. OH groups can react with the $TiCl_4$ which is part of the active sites. This kind of reaction is the reason for a decrease in activity, and increased amount of xylene solubles.

Accordingly it is particular preferred that the solid material is selected form spherical particles of nano-scale consisting of $SiO_2$, polymeric materials and/or $Al_2O_3$.

By nano-scale according to this invention is understood that the solid material has a mean particle size of below 100 nm, more preferred below 90 nm. Accordingly it is preferred that the solid material has a mean particle size of 10 to 90 nm, more preferably from 10 to 70 nm.

It should be noted that it is also an essential feature that the solid material has small mean particle size, i.e. below 200 nm, preferably below 100 nm, as indicated above. Thus, many materials having bigger particle size, e.g. from several hundreds of nm to $\mu$m scale, even if chemically suitable to be used in the present invention, are not the material to be used in the present invention. Such bigger particle size materials are used in catalyst preparation e.g. as traditional external support material as is known in the art. One drawback in using such kind of material in catalyst preparation, especially in final product point of view, is that this type of material leads easily to inhomogeneous material and formation of gels, which might be very detrimental in some end application areas, like in film and fibre production.

It has been in particular discovered that for instance rather high amounts of comonomers, e.g. elastomeric propylene copolymer can be incorporated in a propylene polymer matrix of the heterophasic propylene copolymer without getting sticky in case the surface area of the solid material used is(are) rather low.

Thus the solid material of the catalyst particle as defined in the instant invention must have a surface area below 500 m$^2$/g, more preferably below 300 m$^2$/g, still more preferably below 200 m$^2$/g, yet still more preferably below 100 m$^2$/g.

It has been also discovered that by using solid material with lower surface area (preferably plus low mean particle size as stated above) the amount of solid material within the solid catalyst particle can be decreased but nevertheless an heterophasic propylene copolymer with high amounts of rubber can be produced without getting any stickiness problems (see tables 3A, 3B, 3C and 4).

Considering the above especially preferred the solid material within the solid catalyst particle has

(a) a surface area measured below 100 m$^2$/g, and
(b) a mean particle size below 80 nm.

Such solid material is preferably present in the solid catalyst particle in amounts of 2 to 10 wt.-%.

Preferably the catalyst particle of the present invention is obtained by preparing a solution of one or more catalyst components, dispersing said solution in a solvent, so that the catalyst solution forms a dispersed phase in the continuous solvent phase, and solidifying the catalyst phase to obtain the catalyst particle of the present invention. The solid material in accordance with the present invention may be introduced by appropriately admixing said material with the catalyst solution, during the preparation thereof or after formation of the catalyst phase, i.e. at any stage before the solidification of the catalyst droplets.

Accordingly in one aspect the catalyst particles are obtainable by a process comprising the steps of

(a) contacting the catalyst components as defined above, i.e. a metal compound which is selected from one of the groups 1 to 3 of the periodic table (IUPAC) with a transition metal compound which is selected from one of the groups 4 to 10 of the periodic table (IUPAC) or a compound of an actinide or lanthanide, to form a reaction product in the presence of a solvent, leading to the formation of a liquid/liquid two-phase system comprising a catalyst phase and a solvent phase,

(b) separating the two phases and adding the solid material not comprising catalytically active sites to the catalyst phase,

(c) forming a finely dispersed mixture of said agent and said catalyst phase,

(d) adding the solvent phase to the finely dispersed mixture,

(e) forming an emulsion of the finely dispersed mixture in the solvent phase, wherein the solvent phase represents the continuous phase and the finely dispersed mixture forms the dispersed phase, and

(f) solidifying the dispersed phase.

In another embodiment the catalyst particles are obtainable by a process comprising the steps of

(a) contacting, in the presence of the solid material not comprising catalytically active sites, the catalyst components as defined above, i.e. a metal compound which is selected from one of the groups 1 to 3 of the periodic table (IUPAC) with a transition metal compound which is selected from one of the groups 4 to 10 of the periodic table (IUPAC) or a compound of an actinide or lanthanide, to form a reaction product in the presence of a solvent, leading to the formation of a liquid/liquid two-phase system comprising a catalyst phase and a solvent phase,

(b) forming an emulsion comprising a catalyst phase comprising the solid material and a solvent phase, wherein the solvent phase represents the continuous phase and the catalyst phase forms the dispersed phase, and

(c) solidifying the dispersed phase.

Additional catalyst components, like compounds of group 13 metal, as described above, can be added at any step before the final recovery of the solid catalyst. Further, during the preparation, any agents enhancing the emulsion formation can be added. As examples can be mentioned emulsifying agents or emulsion stabilisers e.g. surfactants, like acrylic or metacrylic polymer solutions and turbulence minimizing agents, like $\alpha$-olefin polymers without polar groups, like polymers of $\alpha$-olefins of 6 to 20 carbon atoms.

Suitable processes for mixing include the use of mechanical as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, additives employed, such as surfactants, etc. are used for adjusting the size of the catalyst particles as well as the size, shape, amount and distribution of the solid material within the catalyst particles.

Particularly suitable methods for preparing the catalyst particles of the present invention are outlined below.

The catalyst solution or phase may be prepared in any suitable manner, for example by reacting the various catalyst precursor compounds in a suitable solvent. In one embodiment this reaction is carried out in an aromatic solvent, preferably toluene, so that the catalyst phase is formed in situ and separates from the solvent phase. These two phases may then be separated and the solid material may be added to the catalyst phase. After subjecting this mixture of catalyst phase and solid material to a suitable dispersion process, for example by mechanical mixing or application of ultrasound, in order to prepare a dispersion of the solid material in the catalyst phase, this mixture (which may be a dispersion of solid material in the catalyst phase forming a microsuspension) may be added back to the solvent phase or a new solvent, in order to form again an emulsion of the disperse catalyst phase in the continuous solvent phase. The catalyst phase, comprising the solid material, usually is present in this mixture in the form of small droplets, corresponding in shape and size approximately to the catalyst particles to be prepared. Said catalyst particles, comprising the solid material may then be formed and recovered in usual manner, including solidifying the catalyst particles by heating and separating steps (for recovering the catalyst particles). In this connection reference is made to the disclosure in the international applications WO 03/000754, WO 03/000757, WO 2007/077027, WO 2004/029112 and WO 2007/077027 disclosing suitable reaction conditions. This disclosure is incorporated herein by reference. The catalyst particles obtained may furthermore be subjected to further post-processing steps, such as washing, stabilizing, prepolymerization, prior to the final use in polymerization processes.

An alternative and preferred to the above outlined method of preparing the catalyst particles of the present invention is a method wherein the solid material is already introduced at the beginning of the process, i.e. during the step of forming the catalyst solution/catalyst phase. Such a sequence of steps facilitates the preparation of the catalyst particles since the catalyst phase, after formation, has not to be separated from the solvent phase for admixture with the solid material.

Suitable method conditions for the preparation of the catalyst phase, the admixture with the solvent phase, suitable additives therefore etc. are disclosed in the above mentioned international applications WO 03/000754, WO 03/000757, WO 2007/077027, WO 2004/029112 and WO 2007/077027, which are incorporated herein by reference.

As is derivable from the above and the following examples, the present invention allows the preparation of a novel catalyst particle comprising solid material as defined in the claims. The size, shape, amount and distribution thereof within the catalyst particle may be controlled by the solid material employed and the process conditions, in particular in the above outlined mixing conditions.

The invention is further directed to the use of the inventive catalyst in polymerization processes, in particular in processes in which heterophasic material, like heterophasic propylene copolymer, or random propylene copolymer is produced.

Also described herein is

A) A Catalyst in form of a solid particle, wherein the particle

(a) has a specific surface area of less than 20 m$^2$g,
(b) comprises a transition metal compound which is selected from one of the groups 4 to 10 of the periodic table (IUPAC) or a compound of actinide or lanthanide,
(c) comprises a metal compound which is selected from one of the groups 1 to 3 of the periodic table (IUPAC), and
(d) comprises solid material, wherein the solid material

(i) does not comprise catalytically active sites,
(ii) has a specific surface area below 500 m$^2$g, and
(iii) has a mean particle size below 100 nm.

B) A Catalyst according to A), wherein the solid material does not comprise

(a) transition metal compounds which are selected from one of the groups 4 to 10 of the periodic table (IUPAC) and
(b) compounds of actinide or lanthanide.

C) A Catalyst according to A) or B), wherein solid material is selected from inorganic materials, organic materials, preferably polymers, or any combination thereof.

D) A Catalyst according to any one of A) to C), wherein the solid material is spherical.

E) A Catalyst according to any one of A) to D), wherein the solid material has mean particle size of not more than 85 nm, preferably not more than 75 nm.

F) A Catalyst according to any one of A) to E), wherein the solid material has a specific surface area of below 440 m$^2$/g, preferably below 300 m$^2$/g.

G) A Catalyst according to any one of A) to F), wherein the solid particle comprises up to 30 wt.-%, preferably not more than 10 wt.-%, solid material.

H) A Catalyst according to any one of A) to G),wherein the solid material is evenly distributed within the solid particle.

I) A Catalyst according to any one of A) to H), wherein the solid particle has a specific surface area of less than 10 m$^2$/g.

J) A Catalyst according to any one of A) to I), wherein the solid particle has a pore volume of less than 1.0 ml/g.

K) A Catalyst according to any one of A) to J), wherein the solid particle is spherical.

L) A Catalyst according to any one of A) to K), wherein the solid particle has a mean particle size below 80 $\mu$m.

M) A Catalyst according to any one of A) to L), wherein the solid particle comprises an internal electron donor compound.

N) Catalyst according to any one of A) to M), wherein the solid particle comprises a compound of formula (I)

$$AlR_{3-o}X_n \qquad (I)$$

wherein
R stands for a straight chain or branched alkyl or alkoxy group having 1 to 20 carbon atoms,
X stands for halogen, and
n stands for 0,1, 2 or 3.

O) A Catalyst according to any one of A) to O), wherein the catalyst is a Ziegler-Natta type catalyst.

P) A Catalyst according to any one of A) to O), wherein the solid particles are obtainable by a process comprising the steps of:

(a) contacting at least one compound of groups 1 to 3 of the periodic table with at least one compound selected from a transition metal compound of groups 4 to 10 of the periodic table or a compound of an actinide or lanthanide to form a reaction product in the presence of a solvent, leading to the formation of a liquid/liquid two-phase system comprising a catalyst phase and a solvent phase,
(b) separating the two phases and adding the solid material not comprising catalytically active sites to the catalyst phase,
(c) forming a finely dispersed mixture of said agent and said catalyst phase,
(d) adding the solvent phase to the finely dispersed mixture,
(e) forming an emulsion of the finely dispersed mixture in the solvent phase, wherein the solvent phase represents the continuous phase and the finely dispersed mixture forms the dispersed phase, and
(f) solidifying the dispersed phase.

Q) A Catalyst according to any one of A) to O), wherein the solid particles are obtainable by a process comprising the steps of :

(a) contacting, in the presence of the solid material not comprising catalytically active sites, at least one compound of groups 1 to 3 of the periodic table with at least one compound selected from a transition metal compound of groups 4 to 10 of the periodic table or a compound of an actinide or lanthanide to form a reaction product in the presence of a solvent, leading to the formation of a liquid/liquid two-phase system comprising a catalyst phase and a solvent phase,
(b) forming an emulsion comprising a catalyst phase comprising said agent and a solvent phase, wherein the solvent phase represents the continuous phase and the catalyst phase forms the dispersed phase, and
(c) solidifying the dispersed phase.

R) A Catalyst system comprising

(a) a catalyst particle according to any one of A) to Q) and
(b) co-catalyst(s) and/or external donor(s) and/or optionally activator(s).

S) The use of a catalyst as defined in any one of A) to Q) or a catalyst system according to R) in a polymerization process of polypropylene, in particular heterophasic propylene copolymer or randon propylene copolymer.

The present invention is further described by way of examples.

## EXAMPLES

### 1. Definitions/Measuring Methods

The following definitions of terms and determination methods apply for the above general description of the invention as well as to the below examples unless otherwise defined. **MFR$_2$ (230 °C)** is measured according to ISO 1133 (230 °C, 2.16 kg load). **RANDOMNESS** in the FTIR measurements, films of 250 mm thickness were compression molded at 225 °C and investigated on a Perkin-Elmer System 2000 FTIR instrument. The ethylene peak area (760-700 $cm^{-1}$) was used as a measure of total ethylene content. The absorption band for the structure -P-E-P- (one ethylene unit between propylene units), occurs at 733 $cm^{-1}$. This band characterizes the random ethylene content. For longer ethylene sequences (more than two units), an absorption band occurs at 720 $cm^{-1}$. Generally, a shoulder corresponding to longer ethylene runs is observed for the random copolymers. The calibration for total ethylene content based on the area and random ethylene (PEP) content based on peak height at 733 $cm^{-1}$ was made by 13C-NMR. (Thermochimica Acta, 66 (1990) 53-68).

$$\text{Randomness} = \text{random ethylene (-P-E-P-) content} / \text{the total ethylene content} \times 100\%.$$

**Melting temperature Tm, crystallization temperature Tc, and the degree of crystallinity:**

measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

**Ethylene content,** in particular of the matrix, is measured with Fourier transform infrared spectroscopy (FTIR) calibrated with 13C-NMR. When measuring the ethylene content in polypropylene, a thin film of the sample (thickness about 250 mm) was prepared by hotpressing. The area of absorption peaks 720 and 733 $cm^{-1}$ was measured with Perkin Elmer FTIR 1600 spectrometer. The method was calibrated by ethylene content data measured by 13C-NMR.

**Content of any one of the C4 to C20 $\alpha$-olefins** is determined with 13C-NMR; literature: "IRSpektroskopie fur Anwender"; WILEY-VCH, 1997 and "Validierung in der Analytik", WILEY-VCH, 1997.

**Xylene soluble fraction (XS) and amorphous fraction (AM)**

2.0 g of polymer are dissolved in 250 ml p-xylene at 135 °C under agitation. After $30\pm2$ minutes the solution is allowed to cool for 15 minutes at ambient temperature and then allowed to settle for 30 minutes at $25\pm0.5$ °C . The solution is filtered with filter paper into two 100 ml flasks.The solution from the first 100 ml vessel is evaporated in nitrogen flow and the residue is dried under vacuum at 90 °C until constant weight is reached.

$$XS\% = (100 \times m_1 \times v_0) / (m_0 \times v_1)$$

$m_0$ = initial polymer amount (g)
$m_1$ = weight of residue (g)
$V_0$ = initial volume (ml)
$V_1$ = volume of analyzed sample (ml)

The solution from the second 100 ml flask is treated with 200 ml of acetone under vigorous stirring. The precipitate is filtered and dried in a vacuum-oven at 90 °C.

$$AM\% = (100 \times m_2 \times v_0) / (m_0 \times v_1)$$

$m_0$ = initial polymer amount (g)
$m_2$ = weight of precipitate (g)
$V_0$ = initial volume (ml)
$V_1$ = volume of analyzed sample (ml)

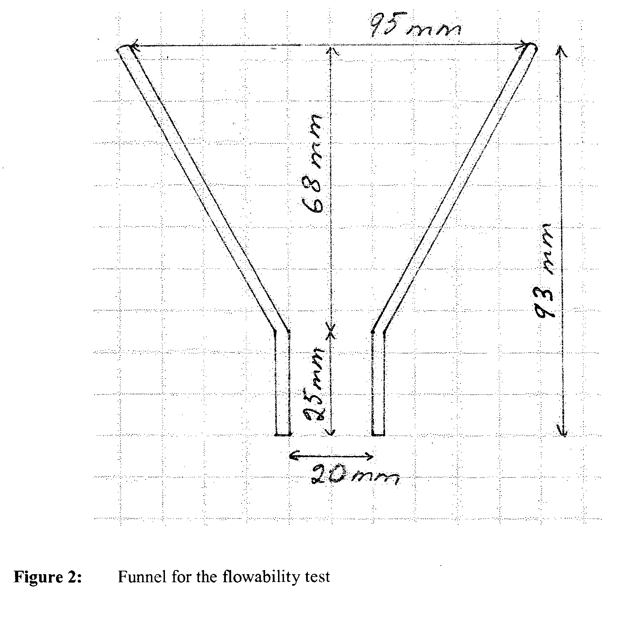

**Flowability** 90 g of polymer powder and 10 ml of xylene was mixed in a closed glass bottle and shaken by hand for 30 minutes. After that the bottle was left to stand for an additional 1.5 hour while occasionally shaken by hand. Flowability was measured by letting this sample flow through a funnel at room temperature. The time it takes for the sample to flow through is a measurement of stickiness. The average of 5 separate determinations was defined as flowability. The dimensions of the funnel can be deducted from figure 2.

**Porosity:** BET with $N_2$ gas, ASTM 4641, apparatus Micromeritics Tristar 3000; sample preparation (catalyst and polymer): at a temperature of 50 °C, 6 hours in vacuum.

**Surface area:** BET with $N_2$ gas ASTM D 3663, apparatus Micromeritics Tristar 3000: sample preparation (catalyst and polymer): at a temperature of 50 °C, 6 hours in vacuum. **Mean particle size** is measured with Coulter Counter LS200 at room temperature with n-heptane as medium; particle sizes below 100 nm by transmission electron microscopy. **Median particle size (d50)** is measured with Coulter Counter LS200 at room temperature with n-heptane as medium.

**Bulk density BD** is measured according ASTM D 1895

**Determination of Ti and Mg amounts in the catalyst**

The determination of Ti and Mg amounts in the catalysts components is performed using ICP. 1000 mg/l standard solutions of Ti and Mg are used for diluted standards (diluted standards are prepared from Ti and Mg standard solutions, distilled water and $HNO_3$ to contain the same $HNO_3$ concentration as catalyst sample solutions).

50-100 mg of the catalyst component is weighed in a 20 ml vial (accuracy of weighing 0.1 mg). 5 ml of concentrated $HNO_3$ (Suprapur quality) and a few milliliters of distilled water is added. The resulting solution is diluted with distilled water to the mark in a 100 ml measuring flask, rinsing the vial carefully. A liquid sample from the measuring flask is filtered using 0.45 $\mu$m filter to the sample feeder of the ICP equipment. The concentrations of Ti and Mg in the sample solutions are obtained from ICP as mg/l.

Percentages of the elements in the catalyst components are calculated using the following equation:

$$\text{Percentage (\%)} = (A \bullet V \bullet 100\% \bullet V \bullet 1000^{-1} \bullet m^{-1}) \bullet (V_a \bullet V_b^{-1})$$

where

A = concentration of the element (mg/l)

V = original sample volume (100 ml)

m = weight of the catalyst sample (mg)

$V_a$ = volume of the diluted standard solution (ml)

$V_b$ = volume of the 1000 mg/l standard solution used in diluted standard solution (ml)

**Determination of donor amounts in the catalyst components**

The determination of donor amounts in the catalyst components is performed using HPLC (UV-detector, RP-8 column, 250 mm $\times$ 4 mm). Pure donor compounds are used to prepare standard solutions.

50-100 mg of the catalyst component is weighed in a 20 ml vial (accuracy of weighing 0.1 mg). 10 ml acetonitrile is added and the sample suspension is sonicated for 5-10 min in an ultrasound bath. The acetonitrile suspension is diluted appropriately and a liquid sample is filtered using 0.45 $\mu$m filter to the sample vial of HPLC instrument. Peak heights are obtained from HPLC.

The percentage of donor in the catalyst component is calculated using the following equation:

$$\text{Percentage (\%)} = A_1 \bullet c \bullet V \bullet A_2^{-1} \bullet m^{-1} \bullet 0.1\%$$

where

$A_1$ = height of the sample peak

c = concentration of the standard solution (mg/l)

V = volume of the sample solution (ml)

$A_2$ = height of the standard peak

m = weight of the sample (mg)

**2. Preparation of the Examples:**

**Example 1:** Preparation of a soluble Mg-complex

A magnesium complex solution was prepared by adding, with stirring, 55.8 kg of a 20 % solution in toluene of BOMAG ($Mg(Bu)_{1,5}(Oct)_{0,5}$) to 19.4 kg 2-ethylhexanol in a 150l steel reactor. During the addition the reactor contents were maintained below 20 °C. The temperature of the reaction mixture was then raised to 60 °C and held at that level for 30 minutes with stirring, at which time reaction was complete. 5.50 kg 1,2-phthaloyl dichloride was then added and stirring of the reaction mixture at 60 °C was continued for another 30 minutes. After cooling to room temperature a yellow solution was obtained.

**Example 2:** Catalyst with solid material

24 kg titanium tetrachloride was placed in a 90l steel reactor. A mixture of 0,190 kg $SiO_2$ nanoparticles (mean

particle size 80 nm; surface area 440 m$^2$/g; bulk density 0.063 g/cm$^3$) provided by Nanostructured & Amorpohous Inc. (NanoAmor) and 21.0 kg of Mg-complex were then added to the stirred reaction mixture over a period of two hours. During the addition of the Mg-complex the reactor contents were maintained below 35 °C. 4.5 kg n-heptane and 1.05l Viscoplex 1-254 of RohMax Additives GmbH (a polyalkyl methacrylate with a viscosity at 100 °C of 90 mm$^2$/s and a density at 15 °C of 0.90 g/ml) were then added to the reaction mixture at room temperature and stirring was maintained at that temperature for a further 60 minutes.

The temperature of the reaction mixture was then slowly raised to 90°C over a period of 60 minutes and held at that level for 30 minutes with stirring. After settling and siphoning the solids underwent washing with a mixture of 0,244l of a 30 % solution in toluene of diethyl aluminum dichlorid and 50 kg toluene for 110 minutes at 90 °C, 30 kg toluene for 110 minutes at 90 °C, 30 kg n-heptane for 60 minutes at 50 °C, and 30 kg n-heptane for 60 minutes at 25 °C.

Finally, 4.0 kg white oil (Primol 352; viscosity at 100 °C of 8.5 mm$^2$/s; density at 15 °C of 5 0.87 g/ml) was added to the reactor. The obtained oil slurry was stirred for a further 10 minutes at room temperature before the product was transferred to a storage container. From the oil slurry a solids content of 23.4 wt.-% was analyzed.

**Example 3A:** Compact catalyst particles - no solid material (Comparative Example) Same as in example 2, but no SiO$_2$ nano-particles were added to the Mg-complex.

**Example 3B:** Preparation of Catalyst with solid material (Comparative Example)

19.5 ml titanium tetrachloride was placed in a 300 ml glass reactor equipped with a mechanical stirrer. 150 mg of EXM 697-2 (magnesium-aluminum-hydroxy-carbonate from Süd-Chemie AG having a mean particle size well above 300 nm) were added thereto. Then 10.0 ml of n-heptane was added. Mixing speed was adjusted to 170 rpm, and 32.0 g Mg-complex was slowly added over a period of 2 minutes. During the addition of the Mg-complex the reactor temperature was kept below 30° C.

A solution of 3.0 mg polydecene in 1.0 ml toluene and 2.0 ml Viscoplex 1-254 were then added to the reaction mixture at room temperature. After 10 minutes stirring, the temperature of the reaction mixture was slowly raised to 90 °C over a period of 20 minutes and held at that level for 30 minutes with stirring.

After settling and syphoning the solids underwent washing with 100 ml toluene at 90 °C for 30 minutes, twice with 60 ml heptane for 10 minutes at 90 °C and twice with 60 ml pentane for 2 minutes at 25 °C. Finally, the solids were dried at 60 °C by nitrogen purge. From the catalyst 13.8 wt- % of magnesium, 3.0 wt-% titanium and 20.2 wt.-% di(2-ethylhexy)phthalate (DOP) was analyzed.

The test homopolymerization was carried out as for catalyst examples 2 to 5.

**Example 4:** Catalyst with solid material

19.5 ml titanium tetrachloride was placed in a 300 ml glass reactor equipped with a mechanical stirrer. Mixing speed was adjusted to 170 rpm. 32.0 g of the Mg-complex were then added to the stirred reaction mixture over a 10 minute period. During the addition of the Mg-complex the reactor contents were maintained below 30 °C.

1.0 ml of a solution in toluene of 3.0 mg polydecene and 2.0 ml Viscoplex 1-254 of RohMax Additives GmbH (a polyalkyl methacrylate with a viscosity at 100 °C of 90 mm$^2$/s and a density at 15 °C of 0.90 g/ml) were then added, and after 5 minutes stirring at room temperature a suspension of 0.4 g SiO$_2$ nanoparticles (mean particle size 80 nm; surface area 440 m$^2$/g; bulk density 0.063 g/cm$^3$) provided by Nanostructured & Amorpohous Inc.

(NanoAmor) in 10.0 ml of n-heptane was added. Stirring was maintained at room temperature for 30 minutes.

The temperature of the reaction mixture was then slowly raised to 90 °C over a period of 20 minutes and held at that level for 30 minutes with stirring.

After settling and syphoning the solids underwent washing with a mixture of 0.11 ml diethyl aluminum chloride and 100 ml toluene at 90°C for 30 minutes, 60 ml heptane for 20 minutes at 90 °C and 60 ml pentane for 10 minutes at 25°C. Finally, the solids were dried at 60 °C by nitrogen purge, to yield a yellow, air-sensitive powder.

**Example 5:** Catalyst with solid material with very low surface area

19.5 ml titanium tetrachloride was placed in a 300 ml glass reactor equipped with a mechanical stirrer. Mixing speed was adjusted to 170 rpm. 32.0 g of the Mg-complex were then added to the stirred reaction mixture over a 10 minute period. During the addition of the Mg-complex the reactor contents were maintained below 30 °C.

1.0 ml of a solution in toluene of 3.0 mg polydecene and 2.0 ml Viscoplex 1-254 of RohMax Additives GmbH (a polyalkyl methacrylate with a viscosity at 100 °C of 90 mm$^2$/s and a density at 15 °C of 0.90 g/ml) were then added, and after 5 minutes stirring at room temperature a suspension of 0.6 g Al$_2$O$_3$ nanoparticles (mean particle size 60 nm; surface area 25 m$^2$/g; bulk density 0.52 g/cm$^3$) provided by Nanostructured & Amorpohous Inc.

(NanoAmor) in 10.0 ml of n-heptane was added. Stirring was maintained at room temperature for 30 minutes.

The temperature of the reaction mixture was then slowly raised to 90 °C over a period of 20 minutes and held at that level for 30 minutes with stirring.

After settling and syphoning the solids underwent washing with a mixture of 0.11 ml diethyl aluminum chloride and 100 ml toluene at 90°C for 30 minutes, 60 ml heptane for 20 minutes at 90 °C and 60 ml pentane for 10 minutes at 25 °C. Finally, the solids were dried at 60 °C by nitrogen purge, to yield a yellow, air-sensitive powder.

**Example 6:**

All raw materials were essentially free from water and air and all material additions to the reactor and the different steps were done under inert conditions in nitrogen atmosphere. The water content in propylene was less than 5 ppm.

The polymerization was done in a 5 liter reactor, which was heated, vacuumed and purged with nitrogen before taken into use. 276 ml TEA (tri ethyl Aluminum, from Witco used as received), 47 ml donor Do (dicyclo pentyl dimethoxy silane, from Wacker, dried with molecular sieves) and 30 ml pentane (dried with molecular sieves and purged with nitrogen) were mixed and allowed to react for 5 minutes. Half of the mixture was added to the reactor and the other half was mixed with 14.9 mg highly active and stereo specific Ziegler Natta catalyst of example 2. After about 10 minutes was the ZN catalyst/TEA/donor Do/pentane mixture added to the reactor. The Al/Ti molar ratio was 250 and the Al/Do molar ratio was 10. 200 mmol hydrogen and 1400 g of propylene were added to the reactor. The temperature was increased from room temperature to 80 °C during 16 minutes. The reaction was stopped, after 30 minutes at 80 °C, by flashing out unreacted monomer. Finally the polymer powder was taken out from the reactor and analysed and tested. The MFR of the product was 6 g/10min. The other polymer details are seen in table 3. The result from the flowability test was 1.9 seconds.

**Example 7:**

This example was done in accordance with example 6, but after having flashed out unreacted propylene after the bulk polymerization step the polymerization was continued in gas phase (rubber stage). After the bulk phase the reactor was pressurised up to 5 bar and purged three times with a 0.75 mol/mol ethylene/propylene mixture. 200 mmol hydrogen was added and temperature was increased to 80 °C and pressure with the aforementioned ethylene/propylene mixture up to 20 bar during 14 minutes. Consumption of ethylene and propylene was followed from scales. The reaction was allowed to continue until in total 403 g of ethylene and propylene had been fed to the reactor. MFR of the final product was 2.8 g/10min and XS was 43.5 wt.-%. The polymer powder showed almost no stickiness, which is also seen in the good flowability. The result from the flowability test was 5.1 seconds. Other details are seen in table 3.

**Example 8:**

This example was done in accordance with example 6, with the exception that the catalyst of example 4 is used. The product had MFR 8.4 g/10min and XS 1.5 wt.-%. The other details are seen in table 3. The result from the flowability test was 2.0 seconds.

**Example 9:**

This example was done in accordance with example 8, with the exception that after the bulk polymerization stage the reaction was continued in gas phase as was described in example 7, with the exception that the hydrogen amount was 180 mmol. The reaction was stopped when in total 411 g of ethylene and propylene had been fed to the reactor. MFR of the product was 3.9 g/10min and XS 44.3 wt.-%. The powder had good flowability. The result from the flowability test was 6.7 seconds. The other details are seen in table 3.

**Example 10:**

This example was done in accordance with example 8, with the exception that after the bulk polymerization stage the reaction was continued in gas phase as was described in example 7, with the exception that the hydrogen amount was 180 mmol. The reaction was stopped when in total 437 g of ethylene and propylene had been fed to the reactor. MFR of the product was 3.6 g/10min and XS 47.8 wt.-%. The powder was slightly sticky. The result from the flowability test was 11.6 seconds. The other details are seen in table 3.

**Example 11:**

This example was done in accordance with example 6, with the exception that the catalyst of example 5 is used. MFR of the product was 9.3 g/10min and XS was 1.6 wt.-%. The result from the flowability test was 3.0 seconds. The other details are seen in table 3.

**Example 12:**

This example was done in accordance with example 11, with the exception that after the bulk polymerization stage the reaction was continued in gas phase as was described in example 7, but with a hydrogen amount of 250 mmol. The reaction was stopped when in total 445 g of ethylene and propylene had been fed to the reactor.
MFR of the product was 3.3 g/10min and XS was 48.8 wt.-%. The polymer powder was free flowing and the result from the flowability test was 6.0 seconds. The other details are seen in table 3.

**Example 13: Comparative example**

This example was done in accordance with example 6, with the exception that the catalyst described in example 3A was used. This catalyst contains no nano particles. MFR of the product was 8.9 g/10min and XS 1.2 w-%. The other details are shown in table 3.

**Example 14: Comparative Example**

This example was done in accordance with example 13, with the exception that after the bulk polymerization stage the reaction was continued in gas phase as was described in example 7, but with a hydrogen amount of 90 mmol. The reaction was stopped when in total 243 g of ethylene and propylene had been fed to the reactor. MFR of the product was 5.1 g/10min and XS was 25.6 wt.-%. The polymer powder was quite sticky already at this low rubber level and the result from the flowability test was 11.4 seconds. The other details are seen in table 3.

**Example 15: Comparative example**

This example was done in accordance with example 13, with the exception that after the bulk polymerization stage the reaction was continued in gas phase as was described in example 7.0 g/10min but with a hydrogen amount of 250 mmol. The reaction was stopped when in total 312 g of ethylene and propylene had been fed to the reactor. MFR of the product was 4.3 g/10min and XS was 34.9 wt.-%. The polymer powder was so sticky that it was not possible to measure the flowability. The other details are seen in table 3.

**Example 16: random PP**

All raw materials were essentially free from water and air and all material additions to the reactor and the different steps were done under inert conditions in nitrogen atmosphere. The water content in propylene was less than 5 ppm.
The polymerization was done in a 5 liter reactor, which was heated, vacuumed and purged with nitrogen before taken into use. 138 ml TEA (tri ethyl Aluminum, from Witco used as received), 47 ml donor Do (dicyclo pentyl dimethoxy silane, from Wacker, dried with molecular sieves) and 30 ml pentane (dried with molecular sieves and purged with nitrogen) were mixed and allowed to react for 5 minutes. Half of the mixture was added to the reactor and the other half was mixed with 12.4 mg highly active and stereo specific Ziegler Natta catalyst of example 2. After about 10 minutes was the ZN catalyst/TEA/donor D/pentane mixture added to the reactor. The Al/Ti molar ratio was 150 and the Al/Do molar ratio was 5. 350 mmol hydrogen and 1400 g were added to the reactor. Ethylene was added continuously during polymerization and totally 19.2 g was added. The temperature was increased from room temperature to 70 °C during 16 minutes. The reaction was stopped, after 30 minutes at 70 °C, by flashing out unreacted monomer. Finally the polymer powder was taken out from the reactor and analysed and tested. The ethylene content in the product was 3.7 w.-%. The other polymer details are seen in table 4.

**Example 17: random PP**

This example was done in accordance with example 16, but after having flashed out unreacted propylene after the bulk polymerization step the polymerization was continued in gas phase. After the bulk phase the reactor was pressurised up to 5 bar and purged three times with a 0.085 mol/mol ethylene/propylene mixture. 150 mmol hydrogen was added and temperature was increased to 80 °C and pressure with the aforementioned ethylene/propylene mixture up to 20 bar during 13 minutes. Consumption of ethylene and propylene was followed from scales. The reaction was allowed to continue until in total 459 g of propylene and propylene had been fed to the reactor. The total yield was 598 g, which means that half of the final product was produced in the bulk phase polymerization and half in the gas phase polymerization. When opening the reactor it was seen that the polymer powder was free flowing. XS of the polymer was 22 wt.-% and ethylene content in the product was 6.0 wt.-%, meaning that ethylene content in material produced in the gas phase was 8.3 wt.-%. The powder is not sticky in the flowability test and the flowability value is very low, 2.3 seconds. Other details are seen in table 4.

**Example 18: random PP - Comparative Example**

This example was done in accordance with example 16 with the exception that the catalyst of example 3A is used. Ethylene content in the polymer was 3.7 wt.-%. The other details are shown in table 4.

**Example 19: random PP - Comparative Example**

This example was done in accordance with example 18, but after having flashed out unreacted propylene after the bulk polymerization step the polymerization was continued in gas phase, as described in example 17. When opening the reactor after polymerization it was seen that about 2/3 of the polymer powder was loosely glued together.

**Table 1: Properties of the catalyst particles**

|  |  | **Ex 2** | **Ex 3A** | **Ex 4** | **Ex 5** |
|---|---|---|---|---|---|
| Ti | [wt.-%] | 2.56 | 3.81 | 3.90 | 2.29 |
| Mg | [wt.-%] | 11.6 | 11.4 | 12.5 | 7.06 |
| DOP | [wt.-%] | 22.7 | 24.4 | 26.7 | 28.1 |
| Nanoparticles | [wt.-%] | 7.4 | - | 8.9 | 5.1 |
| $d_{50}$ | [$\mu$m] | 25.6 | 21.9 | 34,5 | 29,7 |
| Mean | [$\mu$m] | 25.60 | 20.2 | 35.4 | 32.9 |
| Surface area* | [$m^2$/g] | 13,0 | <5 | <5 | <5 |
| Porosity | [ml/g] | 0,09 | - | 0,0 | 0,0 |
| *the lowest limit for measure surface area by the used method is 5 $m^2$/g | | | | | |

**Test Homopolymerization with catalysts of examples 2 to 5**

The propylene bulk polymerization was carried out in a stirred 5 l tank reactor. About 0.9 ml triethyl aluminum (TEA) as a co-catalyst, ca. 0.12 ml cyclohexyl methyl dimethoxy silane (CMMS) as an external donor and 30 ml n-pentane were mixed and allowed to react for 5 minutes. Half of the mixture was then added to the polymerization reactor and the other half was mixed with about 20 mg of a catalyst. After additional 5 minutes the catalyst/TEA/donor/n-pentane mixture was added to the reactor. The Al/Ti mole ratio was 250 mol/mol and the Al/CMMS mole ratio was 10 mol/mol. 70 mmol hydrogen and 1400 g propylene were introduced into the reactor and the temperature was raised within ca 15 minutes to the polymerization temperature 80 °C. The polymerization time after reaching polymerization temperature was 60 minutes, after which the polymer formed was taken outfrom the reactor.

**Table 2: Homopolymerization results**

|  |  | **Ex 2** | **Ex 3A** | **EX 3B** | **Ex 4** | **Ex 5** |
|---|---|---|---|---|---|---|
| Activity | [kg PP/g cat*1h] | 34.2 | 31.9 | 27.6 | 30.5 | 33.7 |
| XS | [wt.-%] | 1.3 | 1.6 | 2.1 | 1.4 | 1.5 |
| MFR | [g/10 min] | 7.4 | 8.0 | 5.9 | 6.8 | 5.4 |
| Bulk density | [kg/$m^3$] | 517 | 528 | 400 | 510 | 390 |
| Surface area* | [$m^2$/g] | <5 | <5 |  | <5 | <5 |

(continued)

| | | Ex 2 | Ex 3A | EX 3B | Ex 4 | Ex 5 |
|---|---|---|---|---|---|---|
| Porosity | [ml/g] | 0,0 | - | | 0,0 | 0,0 |

*the lowest limit for measure surface area by the used method is 5 $m^2$/g

From the test homopolymerization results it can be seen that polymer produced with comparative catalyst 3B, i.e. catalyst with solid material being magnesium-aluminum-hydroxy-carbonate has clearly lower activity as well clearly higher XS. The solid material used in comparative example 3B has particles from several hundreds nm to several micrometers.

**Table 3 (A)**: Polymerization results of examples 6 to 9

| | | Ex 6 | Ex 7 | Ex 8 | Ex 9 |
|---|---|---|---|---|---|
| Cat of example | | Ex 2 | Ex 2 | E 4 | Ex 4 |
| Cat amount | [mg] | 14.9 | 11.7 | 11.7 | 12.8 |
| **Bulk polymerization** | | | | | |
| Temperature | [°C] | 80 | 80 | 80 | 80 |
| Time | [min] | 30 | 30 | 30 | 30 |
| **Gas phase polymerization** | | | | | |
| Hydrogen | [mmol] | - | 200 | - | 180 |
| Time | [min] | - | 45 | - | 53 |
| Ethylene/propylene in feed | [mol/mol] | - | 0.75 | - | 0.75 |
| Ethylene fed total | [g] | - | 135 | - | 134 |
| Propylene fed total | [g] | - | 268 | - | 277 |
| Yield | [g] | 404 | 608 | 274 | 590 |
| **Polymer product** | | | | | |
| Ethylene in polymer | [wt.-%] | - | 16.7 | - | 17.3 |
| XS | [wt.-%] | 0.8 | 43.5 | 1.5 | 44.3 |
| AM | [wt.-%] | - | 42.8 | - | 43.5 |
| Ethylene in AM | [wt.-%] | - | 32.8 | - | 35.7 |
| Mw of AM / 1000 | [g/mol] | - | 230 | - | 217 |
| MFR | [g/10min] | 6 | 2.8 | 8.4 | 3.9 |
| Melting point | [°C] | 164.9 | 163.8 | 163.8 | 164.6 |
| Crystallinity | [%] | 55 | 27 | 53 | 27 |
| Flow average | [s] | 1.9 | 5.1 | 2.0 | 6.7 |

**Table 3 (B)**: Polymerization results of examples 10 to 12

| | | Ex 10 | Ex 11 | Ex 12 |
|---|---|---|---|---|
| Cat of example | | Ex 4 | Ex 5 | Ex 5 |
| Cat amount | [mg] | 12.7 | 11.7 | 12.5 |
| **Bulk polymerization** | | | | |
| Temperature | [°C] | 80 | 80 | 80 |
| Time | [min] | 30 | 30 | 30 |
| **Gas phase polymerization** | | | | |
| Hydrogen | [mmol] | 180 | | 250 |
| Time | [min] | 61 | | 50 |
| Ethylene/propylene in feed | [mol/mol] | 0.75 | | 0.75 |
| Ethylene fed total | [g] | 144 | | 148 |
| Propylene fed total | [g] | 293 | | 297 |

(continued)

| Gas phase polymerization | | | | |
|---|---|---|---|---|
| Yield | [g] | 606 | 285 | 625 |
| **Polymer product** | | | | |
| Ethylene in polymer | [wt.-%] | 19.1 | | 19.8 |
| XS | [wt.-%] | 47.8 | 1.6 | 48.8 |
| AM | [wt.-%] | 46.2 | | 48.3 |
| Ethylene in AM | [wt.-%] | 34.7 | | 30 |
| Mw of AM / 1000 | [g/mol] | 226 | | 250 |
| MFR | [g/10min] | 3.6 | 9.3 | 3.3 |
| Melting point | [°C] | 162.6 | 163.8 | 162.8 |
| Crystallinity | [%] | 25 | 54 | 24 |
| Flow average | [s] | 11.6 | 3.0 | 6.0 |

**Table 3 (C)**: Polymerization results of examples 10 to 12

| | | Ex 13 Comp | Ex 14 Comp | Ex 15 Comp |
|---|---|---|---|---|
| Catalyst of example | | Ex 3A | Ex 3A | Ex 3A |
| Cat amount | [mg] | 16.5 | 16.5 | 16.5 |
| **Bulk polymerization** | | | | |
| Temperature | [°C] | 80 | 80 | 80 |
| Time | [min] | 30 | 30 | 30 |
| **Gas phase polymerization** | | | | |
| Hydrogen | [mmol] | - | 90 | 90 |
| Time | [min] | - | 21 | 32 |
| Ethylene/propylene in feed | [mol/mol] | - | 0.75 | 0.75 |
| Ethylene fed total | [g] | - | 79 | 106 |
| Propylene fed total | [g] | - | 164 | 206 |
| Yield | [g] | 299 | 436 | 519 |
| **Polymer product** | | | | |
| Ethylene in polymer | [wt.-%] | - | 10.7 | 13.9 |
| XS | [wt.-%] | 1.2 | 25.6 | 34.9 |
| AM | [wt.-%] | - | 25 | 34 |
| Ethylene in AM | [wt.-%] | - | 36 | 37.1 |
| Mw of AM / 1000 | [g/mol] | - | 270 | 271 |
| MFR | [g/10min] | 8.9 | 5.1 | 4.3 |
| Melting point | [°C] | 164.9 | 163.2 | 163.9 |
| Crystallinity | [%] | 48 | 37 | 34 |
| Flow average | [s] | 1.6 | 11.4 | too sticky |

**Table 4: Polymerization results of examples 16 to 19**

| | | Ex 16 | Ex 17 | Ex 18 Comp | Ex 19 Comp |
|---|---|---|---|---|---|
| Catalyst of example | | Ex 2 | Ex 2 | Ex 3A | Ex 3A |
| Cat amount | [mg] | 12.4 | 12.5 | 16.2 | 16.2 |
| **Bulk** | | | | | |
| Ethylene fed | [g] | 19.2 | 19.3 | 19.7 | 19.3 |
| **Gas phase polymerization** | | | | | |
| Time | [min] | - | 65 | - | 77 |
| Ethylene/propylene in feed | [mol/mol] | - | 0.085 | - | 0.085 |
| Ethylene fed | [g] | - | 25 | - | 26.2 |

(continued)

| Gas phase polymerization | | | | | |
|---|---|---|---|---|---|
| Propylene fed | [g] | - | 434 | - | 467 |
| Yield | [g] | 282 | 598 | 318 | 630 |
| Split: Bulk/gas phase material | weight/weight | 100/0 | 50/50 | 100/0 | 50/50 |
| **Polymer** | | | | | |
| Ethylene | [wt.-%] | 3.7 | 6 | 3.7 | 6.3 |
| Ethylene in gas phase material | [wt.-%] | - | 8.3 | - | 8.9 |
| Randomness | % | 75.6 | 67.7 | 75.7 | 66.9 |
| XS | [wt.-%] | 6.7 | 22 | 7.6 | 23.3 |
| MFR | [g/10min] | 5.0 | 4.0 | 7.5 | 5.8 |
| Melting point | [°C] | 140.1 | 134.7 | 139 | 132.5 |
| Crystallinity | [%] | 36 | 27 | 36 | 27 |
| Flow average | [s] | - | 2.3 | - | 5.7 |

## Claims

1. Catalyst in form of a solid particle, wherein the particle

   (a) has a specific surface area of less than 20 $m^2$/g,
   (b) comprises a transition metal compound, where the metal is selected from one of the groups 4 to 10 of the periodic table (IUPAC) or a compound of actinide or lanthanide,
   (c) comprises a metal compound, where the metal is selected from one of the groups 1 to 3 of the periodic table (IUPAC), and
   (d) comprises solid material, wherein the solid material

      (i) does not comprise catalytically active sites,
      (ii) has a specific surface area below 500 $m^2$/g, and
      (iii) has a mean particle size below 200 nm.

2. Catalyst according to claim 1, wherein the solid material does not comprise

   (a) transition metal compounds, where the metal is selected from one of the groups 4 to 10 of the periodic table (IUPAC) and
   (b) compounds of actinide or lanthanide.

3. Catalyst according to claim 1 or 2, wherein the solid material is selected from the group consisting of inorganic materials, organic materials, preferably polymers, and any combination thereof.

4. Catalyst according to any one of the preceding claims, wherein the solid particle and/or the solid material is/are spherical.

5. Catalyst according to any one of the preceding claims, wherein the solid material has

   (a) mean particle size of not more than 85 nm, preferably not more than 75 nm, and/or
   (b) a specific surface area of below 440 $m^2$/g, preferably of below 300 $m^2$/g.

6. Catalyst according to any one of the preceding claims, wherein the solid particle comprises up to 30 wt.%, preferably not more than 10 wt.-%, solid material.

7. Catalyst according to any one of the preceding claims, wherein the solid material is evenly distributed within the solid particle.

8. Catalyst according to any one of the preceding claims, wherein the solid particle has

(a) a specific surface area of less than 10 m$^2$/g, and/or

(b) a pore volume of less than 1.0 ml/g.

9. Catalyst according to any one of the preceding claims, wherein the solid particle has a mean particle size below 80 mm.

10. Catalyst according to any one of the preceding claims, wherein the solid particle comprises an internal electron donor compound.

11. Catalyst according to any one of the preceding claims, wherein the solid particle comprises a compound of formula (I)

$$AlR_{3-n}X_n \qquad (I)$$

wherein

R stands for a straight chain or branched alkyl or alkoxy group having 1 to 20 carbon atoms,
X stands for halogen, and
n stands for 0, 1, 2 or 3.

12. Catalyst according to any one of the preceding claims, wherein the catalyst is a Ziegler-Natta type catalyst.

13. Catalyst according to any one of the preceding claims, wherein the solid particles are obtainable by a process comprising the steps of

(a) contacting at least one compound of groups 1 to 3 of the periodic table with at least one compound selected from a transition metal compound of groups 4 to 10 of the periodic table or a compound of an actinide or lanthanide to form a reaction product in the presence of a solvent, leading to the formation of a liquid/liquid two-phase system comprising a catalyst phase and a solvent phase,
(b) separating the two phases and adding the solid material not comprising catalytically active sites to the catalyst phase,
(c) forming a finely dispersed mixture of said agent and said catalyst phase,
(d) adding the solvent phase to the finely dispersed mixture,
(e) forming an emulsion of the finely dispersed mixture in the solvent phase, wherein the solvent phase represents the continuous phase and the finely dispersed mixture forms the dispersed phase, and
(f) solidifying the dispersed phase.

14. Catalyst according to any one of the preceding claims 1 to 12, wherein the solid particles are obtainable by a process comprising the steps of

(a) contacting, in the presence of the solid material not comprising catalytically active sites, at least one compound of groups 1 to 3 of the periodic table with at least one compound selected from a transition metal compound of groups 4 to 10 of the periodic table or a compound of an actinide or lanthanide to form a reaction product in the presence of a solvent, leading to the formation of a liquid/liquid two-phase system comprising a catalyst phase and a solvent phase,
(b) forming an emulsion comprising a catalyst phase comprising said agent and a solvent phase, wherein the solvent phase represents the continuous phase and the catalyst phase forms the dispersed phase, and
(c) solidifying the dispersed phase.

15. Catalyst system comprising

(a) a catalyst particle according to any one of the preceding claims and
(b) co-catalyst(s) and/or external donor(s) and/or optionally activator(s).

16. Use of a catalyst as defined in any one of the claims 1 to 14 or a catalyst system according to claim 15 in a polymerization process of polypropylene, in particular heterophasic propylene copolymer or randon propylene copolymer.

**Patentansprüche**

1.  Katalysator in Form eines festen Teilchens, wobei das Teilchen

    (a) eine spezifische Oberfläche von weniger als 20 $m^2/g$ aufweist,
    (b) eine Übergangsmetall-Verbindung, wobei das Metall aus einer der Gruppen 4 bis 10 des Periodensystems (IUPAC) ausgewählt ist oder eine Aktinid- oder Lanthanid-Verbindung umfasst,
    (c) eine Metall-Verbindung umfasst, wobei das Metall aus einer der Gruppen 1 bis 3 des Periodensystems (IUPAC) ausgewählt ist, und
    (d) festes Material umfasst, wobei das feste Material

    (i) keine katalytisch aktiven Stellen umfasst,
    (ii) eine spezifische Oberfläche unter 500 $m^2/g$ aufweist, und
    (iii) eine mittlere Teilchen-Größe unter 200 nm aufweist.

2.  Katalysator nach Anspruch 1, wobei das feste Material nicht umfasst

    (a) Übergangsmetall-Verbindungen, wobei das Metall aus einer der Gruppen 4 bis 10 des Periodensystems (IUPAC) ausgewählt ist und
    (b) Aktinid- oder Lanthanid-Verbindungen.

3.  Katalysator nach Anspruch 1 oder 2, wobei das feste Material aus der Gruppe, bestehend aus anorganischen Materialien, organischen Materialien, vorzugsweise Polymeren und einer beliebigen Kombination davon, ausgewählt ist.

4.  Katalysator nach einem der vorangehenden Ansprüche, wobei das feste Teilchen und/oder das feste Material kugelförmig ist/sind.

5.  Katalysator nach einem der vorangehenden Ansprüche, wobei das feste Material

    (a) eine mittlere Teilchen-Größe von nicht mehr als 85 nm, vorzugsweise nicht mehr als 75 nm, und/oder
    (b) eine spezifische Oberfläche von unter 440 $m^2/g$, vorzugsweise von unter 300 $m^2/g$, aufweist.

6.  Katalysator nach einem der vorangehenden Ansprüche, wobei das feste Teilchen bis zu 30 Gew.-%, vorzugsweise nicht mehr als 10 Gew.-%, festes Material umfasst.

7.  Katalysator nach einem der vorangehenden Ansprüche, wobei das feste Material in dem festen Teilchen gleichmäßig verteilt ist.

8.  Katalysator nach einem der vorangehenden Ansprüche, wobei das feste Teilchen

    (a) eine spezifische Oberfläche von weniger als 10 $m^2/g$,
    und/oder
    (b) ein Poren-Volumen von weniger als 1,0 ml/g aufweist.

9.  Katalysator nach einem der vorangehenden Ansprüche, wobei das feste Teilchen eine mittlere Teilchen-Größe unter 80 mm aufweist.

10. Katalysator nach einem der vorangehenden Ansprüche, wobei das feste Teilchen eine innere Elektronen-Donor-Verbindung umfasst.

11. Katalysator nach einem der vorangehenden Ansprüche, wobei das feste Teilchen eine Verbindung der Formel (I)

    $$AlR_{3-n}X_n \qquad (I)$$

    umfasst, worin

    R für eine gerad-kettige oder verzweigte Alkyl- oder Alkoxy-Gruppe mit 1 bis 20 Kohlenstoff-Atomen steht,

X für Halogen steht, und
n für 0, 1, 2 oder 3 steht.

**12.** Katalysator nach einem der vorangehenden Ansprüche, wobei der Katalysator ein Katalysator vom Ziegler-Natta-Typ ist.

**13.** Katalysator nach einem der vorangehenden Ansprüche, wobei die festen Teilchen durch ein Verfahren erhältlich sind, umfassend die Schritte von

(a) In-Kontakt-Bringen mindestens einer Verbindung der Gruppen 1 bis 3 des Periodensystems mit mindestens einer Verbindung, ausgewählt aus einer Übergangsmetall-Verbindung der Gruppen 4 bis 10 des Periodensystems oder einer Verbindung von einem Aktinid oder Lanthanid, um ein Reaktions-Produkt in Gegenwart eines Lösungsmittels bzw. Lösemittels zu bilden, was zur Bildung eines flüssig/flüssig-Zwei-Phasen-Systems, umfassend eine Katalysator-Phase und eine Lösungsmittel-Phase, führt,
(b) Trennen der zwei Phasen und Zugeben des festen Materials, das keine katalytisch aktive Stellen an der Katalysator-Phase umfasst,
(c) Bilden eines fein dispergierten Gemisches von dem Mittel und der Katalysator-Phase,
(d) Zugeben der Lösungsmittel-Phase zu dem fein dispergierten Gemisch,
(c) Bilden einer Emulsion von dem fein dispergierten Gemisch in der Lösungsmittel-Phase, wobei die Lösungsmittel-Phase die kontinuierliche Phase wiedergibt und das fein dispergierte Gemisch die dispergierte Phase bildet, und
(f) Verfestigen der dispergierten Phase.

**14.** Katalysator nach einem der vorangehenden Ansprüche 1 bis 12, wobei die festen Teilchen durch ein Verfahren erhältlich sind, umfassend die Schritte von

(a) In-Kontakt-Bringen in Gegenwart des festen Materials, das keine katalytisch aktiven Stellen umfasst, mindestens einer Verbindung der Gruppen 1 bis 3 des Periodensystems mit mindestens einer Verbindung, ausgewählt aus eine Übergangsmetall-Verbindung der Gruppen 4 bis 10 des Periodensystems oder einer Verbindung von einem Aktinid oder Lanthanid, um ein Reaktions-Produkt in Gegenwart eines Lösungsmittels bzw. Lösemittels zu bilden, was zur Bildung eines flüssig/flüssig-Zwei-Phasen-Systems*//, umfassend eine Katalysator-Phase und eine Lösungsmittel-Phase, führt,
(b) Bilden einer Emulsion, umfassend eine Katalysator-Phase, umfassend das Mittel und eine Lösungsmittel-Phase, wobei die Lösungsmittel-Phase die kontinuierliche Phase wiedergibt und die Katalysator-Phase die dispergierte Phase bildet, und
(c) Verfestigen der dispergierten Phase.

**15.** Katalysator-System, umfassend

(a) ein Katalysator-Teilchen nach einem der vorangehenden Ansprüche und
(b) Co-Katalysator(en) und/oder äußere(n) Donor(en) und/oder gegebenenfalls Aktivator(en).

**16.** Verwendung von einem Katalysator, wie in einem der Ansprüche 1 bis 14 definiert oder einem Katalysator-System nach Anspruch 15 in einem Polymerisations-Verfahren von Polypropylen, insbesondere heterophasischem Propylen-Copolymer oder statistischem Propylen-Copolymer.

## Revendications

**1.** Catalyseur sous la forme d'une particule solide, dans lequel la particule

(a) présente une surface spécifique inférieure à 20 $m^2/g$,
(b) comprend un composé de métal de transition dont le métal est choisi parmi l'un des Groupes 4 à 10 du Tableau Périodique (IUPAC) ou un composé d'actinide ou de lanthanide,
(c) comprend un composé métallique dont le métal est choisi parmi l'un des Groupes 1 à 3 du Tableau Périodique (IUPAC), et
(d) comprend un matériau solide, le matériau solide

(i) ne comprenant pas de sites catalytiquement actifs,
(ii) présentant une surface spécifique inférieure à 500 $m^2$/g, et
(iii) présentant une granulométrie moyenne inférieure à 200 nm.

2. Catalyseur selon la revendication 1, dans lequel le matériau solide ne comprend pas

(a) de composés de métal de transition dont le métal est choisi parmi l'un des Groupes 4 à 10 du Tableau Périodique (IUPAC) et
(b) de composés d'actinide ou de lanthanide.

3. Catalyseur selon la revendication 1 ou 2, dans lequel le matériau solide est choisi dans l'ensemble constitué par les matériaux inorganiques, les matériaux organiques, de préférence les polymères, et l'une quelconque de leurs combinaisons.

4. Catalyseur selon l'une quelconque des revendications précédentes, dans lequel la particule solide et/ou le matériau solide est/sont sphérique(s).

5. Catalyseur selon l'une quelconque des revendications précédentes, dans lequel le matériau solide présente

(a) une granulométrie moyenne ne dépassant pas 85 nm, de préférence ne dépassant pas 75 nm, et/ou
(b) une surface spécifique inférieure à 440 $m^2$/g, de préférence inférieure à 300 $m^2$/g.

6. Catalyseur selon l'une quelconque des revendications précédentes, dans lequel la particule solide comprend jusqu'à 30 % en poids, de préférence au plus 10 % en poids, de matériau solide.

7. Catalyseur selon l'une quelconque des revendications précédentes, dans lequel le matériau solide est distribué uniformément à l'intérieur de la particule solide.

8. Catalyseur selon l'une quelconque des revendications précédentes, dans lequel la particule solide présente

(a) une surface spécifique inférieure à 10 $m^2$/g, et/ou
(b) un volume de pores inférieur à 1,0 ml/g.

9. Catalyseur selon l'une quelconque des revendications précédentes, dans lequel la particule solide présente une granulométrie moyenne inférieure à 80 mm.

10. Catalyseur selon l'une quelconque des revendications précédentes, dans lequel la particule solide comprend un composé donneur d'électron interne.

11. Catalyseur selon l'une quelconque des revendications précédentes, dans lequel la particule solide comprend un composé de formule (I)

$$AlR_{3-n}X_n \qquad (I)$$

dans laquelle
R représente un groupe alkyle ou alcoxy à chaîne droite ou ramifiée possédant de 1 à 20 atome(s) de carbone,
X représente un halogène, et
n représente 0, 1, 2 ou 3.

12. Catalyseur selon l'une quelconque des revendications précédentes, lequel catalyseur est un catalyseur de type Ziegler-Natta.

13. Catalyseur selon l'une quelconque des revendications précédentes, dans lequel les particules solides peuvent être obtenues par un procédé comprenant les étapes

(a) de mise en contact d'au moins un composé des Groupes 1 à 3 du Tableau Périodique avec au moins un composé choisi parmi un composé de métal de transition des Groupes 4 à 10 du Tableau Périodique ou un composé d'un actinide ou lanthanide pour former un produit réactionnel en présence d'un solvant, ce qui conduit à la formation d'un système biphasique liquide/liquide comprenant une phase de catalyseur et une phase de solvant,
(b) de séparation des deux phases et d'ajout à la phase de catalyseur du matériau solide ne comprenant pas de sites catalytiquement actifs,
(c) de formation d'un mélange finement dispersé dudit agent et de ladite phase de catalyseur,
(d) d'ajout de la phase de solvant au mélange finement dispersé,
(e) de formation d'une émulsion du mélange finement dispersé dans la phase de solvant, la phase de solvant représentant la phase continue et le mélange finement dispersé formant la phase dispersée, et
(f) de solidification de la phase dispersée.

**14.** Catalyseur selon l'une quelconque des revendications 1 à 12, dans lequel les particules solides peuvent être obtenues par un procédé comprenant les étapes

(a) de mise en contact, en présence du matériau solide ne comprenant pas de sites catalytiquement actifs, d'au moins un composé des Groupes 1 à 3 du Tableau Périodique avec au moins un composé choisi parmi un composé de métal de transition des Groupes 4 à 10 du Tableau Périodique ou un composé d'un actinide ou lanthanide pour former un produit réactionnel en présence d'un solvant, ce qui conduit à la formation d'un système biphasique liquide/liquide comprenant une phase de catalyseur et une phase de solvant,
(b) de formation d'une émulsion comprenant une phase de catalyseur comprenant ledit agent et une phase de solvant, la phase de solvant représentant la phase continue et la phase de catalyseur formant la phase dispersée, et
(f) solidifier la phase dispersée.

**15.** Système catalyseur comprenant

(a) une particule de catalyseur selon l'une quelconque des revendications précédentes, et
(b) un ou plusieurs co-catalyseur(s) et/ou donneur(s) externe(s) et/ou éventuellement un ou plusieurs activateur(s).

**16.** Utilisation d'un catalyseur tel que défini dans l'une quelconque des revendications 1 à 14 ou d'un système catalyseur selon la revendication 15 dans un procédé de polymérisation de polypropylène, en particulier de copolymère de propylène hétérophasique ou de copolymère de propylène statistique.

**Figure 1:**   Flowability was measured by letting 90 g of polymer powder flow through a funnel. The time it takes for the sample to flow through is a measurement of stickiness.

**Figure 2:** Funnel for the flowability test

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005113613 A
- WO 03000754 A
- WO 2007077027 A
- WO 03000757 A
- WO 2004029112 A

### Non-patent literature cited in the description

- *Quim. Nova,* 2004, vol. 27 (4), 601-614
- *Thermochimica Acta,* 1990, vol. 66, 53-68
- IRSpektroskopie fur Anwender. WILEY-VCH, 1997
- Validierung in der Analytik. WILEY-VCH, 1997